# EUROPEAN PATENT SPECIFICATION

(11) **EP 2 820 267 B1**
(45) Date of publication and mention of the grant of the patent: **06.10.2021**
(21) Application number: 13804162.9
(22) Date of filing: 25.02.2013
(51) Int. Cl.: F02C 3/067, F02K 3/072, F02C 7/36, F02C 3/113

(54) **COUNTER ROTATING LOW PRESSURE COMPRESSOR AND TURBINE EACH HAVING A GEAR SYSTEM**
GEGENLÄUFIGER NIEDERDRUCKVERDICHTER UND TURBINE, BEIDE MIT EINEM GETRIEBESYSTEM
COMPRESSEUR ET TURBINE BASSE PRESSION CONTRAROTATIFS AYANT CHACUN UNE TRANSMISSION PAR ENGRENAGES

(30) Priority: 29.02.2012 US 201213408204
(43) Date of publication of application: 07.01.2015
(73) Proprietor: Raytheon Technologies Corporation, Farmington, CT 06032 (US)
(72) Inventor: SUCIU, Gabriel, L., Glastonbury, CT 06033 (US); MERRY, Brian, D., Andover, CT 06232 (US)
(74) Representative: Dehns
(86) International application number: PCT/US2013/027550
(87) International publication number: WO 2013/187944

(56) References cited:
- US-A- 4 860 537
- US-A- 4 969 325
- US-A1- 2010 154 384
- US-A1- 2010 154 384
- US-A1- 2010 218 478
- US-A1- 2010 326 050
- US-B2- 7 950 220
- US-B2- 8 015 798
- None

## Description

### BACKGROUND

A typical jet engine has multiple shafts or spools that transmit torque between turbine and compressor sections of the engine. In one example, a low speed spool generally includes a low shaft that interconnects a fan, a low pressure compressor, and a low pressure turbine. In order to achieve a desirable high pressure core ratio, a long low shaft is required. In contrast, to increase an engine's power density, there is a countering goal of shortening the overall engine length. Thus, historically these two concepts have been at odds.

A gas turbine engine having the features of the preamble of claim 1 is disclosed in US 2010/0218478 A1. A gas turbine engine having a counter rotating turbine section is disclosed in US 2010/0154384 A1.

### SUMMARY

According to the invention there is provided a gas turbine engine as set forth in claim 1.

In an embodiment of the above, the transmission is configured to rotate the inner compressor stage at a faster speed than the outer compressor stage.

In a further embodiment of any of the above, the first compressor stage and fan are driven at the same speed.

In a further embodiment of any of the above, the transmission provides a gear ratio of greater than 0.5:1.

In a further embodiment of any of the above, the gear system is configured to rotate the inner set of turbine blades at a faster speed than the outer set of turbine blades.

In a further embodiment of any of the above, the gear system provides a gear ratio of greater than 0.5:1.

In a further embodiment of any of the above, the high pressure compressor has a pressure ratio of approximately 23:1.

In a further embodiment of any of the above, the fan is directly driven by the shaft.

In a further embodiment of any of the above, the inner compressor stage is directly driven by the shaft.

In a further embodiment of any of the above, the transmission includes a sun gear directly coupled to the shaft. A plurality of star gears are in meshing engagement with the sun gear and a ring gear is in meshing engagement with the star gears.

In a further embodiment of any of the above, the fan is directly driven by the shaft.

In a further embodiment of any of the above, the star gears are supported by a carrier that is fixed against rotation to static structure.

In a further embodiment of any of the above, the outer compressor stage is coupled to the ring gear.

In a further embodiment of any of the above, the outer set of turbine blades is directly driven by the shaft.

In a further embodiment of any of the above, the gear system includes a sun gear directly coupled to the outer turbine rotor. A plurality of star gears are in meshing engagement with the sun gear and a ring gear is in meshing engagement with the star gears.

In a further embodiment of any of the above, the star gears are supported by a carrier that is fixed to a mid-turbine frame.

In a further embodiment of any of the above, the sun gear is fixed for rotation to a fore end of the outer turbine rotor.

In a further embodiment of any of the above, a fore end of the outer turbine rotor is coupled to the ring gear, and an aft end of the outer turbine rotor is coupled to the shaft.

In a further embodiment of any of the above, the gear system is supported by a mid-turbine frame. A low pressure turbine static case has an aft end unsupported and a fore end connected to a mid-turbine frame outer case.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a cross-sectional view of an engine upper half showing an embodiment of a non-counter-rotating configuration and an engine lower half showing an example of a counter-rotating low pressure compressor architecture and counter-rotating low pressure turbine architecture of a gas turbine engine.
Figure 3 shows an enlarged view of the low pressure compressor shown in Figure 2.
Figure 4 shows an enlarged view of the low pressure turbine shown in Figure 2.
Figure 5 shows a schematic view of the lower pressure compressor shown in Figure 2.
Figure 6 a schematic view of the lower pressure turbine shown in Figure 2.

### DETAILED DESCRIPTION

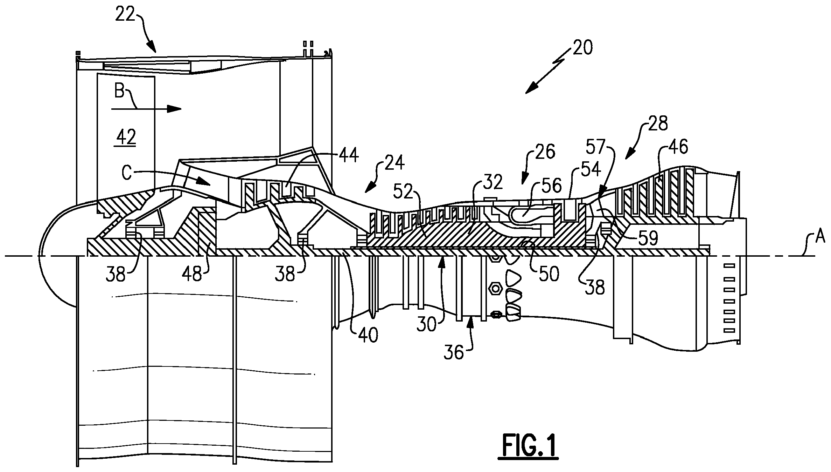

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure (or first) compressor section 44 and a low pressure (or first) turbine section 46. The inner shaft 40 is connected to the fan 42 through a geared architecture 48 to drive the fan 42 at a lower speed than the low speed spool 30. The high speed spool 32 includes an outer shaft 50 that interconnects a high pressure (or second) compressor section 52 and high pressure (or second) turbine section 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 supports one or more bearing systems 38 in the turbine section 28. The inner shaft 40 and the outer shaft 50 are concentric and rotate via bearing systems 38 about the engine central longitudinal axis A, which is collinear with their longitudinal axes. As used herein, a "high pressure" compressor or turbine experiences a higher pressure than a corresponding "low pressure" compressor or turbine.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a star gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10668 m (35,000 feet). The flight condition of 0.8 Mach and 10668m (35,000 ft), with the engine at its best fuel consumption - also known as "bucket cruise Thrust Specific Fuel Consumption ('TSFC')" - is the industry standard parameter of lbm of fuel being burned per hour divided by lbf of thrust the engine produces at that minimum point. "Fan pressure ratio" is the pressure ratio across the fan blade alone, without a Fan Exit Guide Vane ("FEGV") system. The fan pressure ratio as disclosed herein according to one non-limiting embodiment is less than about 1.45. "Low corrected fan tip speed" is the actual fan tip speed in ft/sec divided by an industry standard temperature correction of [(Tambient deg R) / 518.7)^{∧}0.5]. The "Low corrected fan tip speed" as disclosed herein according to one non-limiting embodiment is less than about 350m/ second (1150 ft/second).

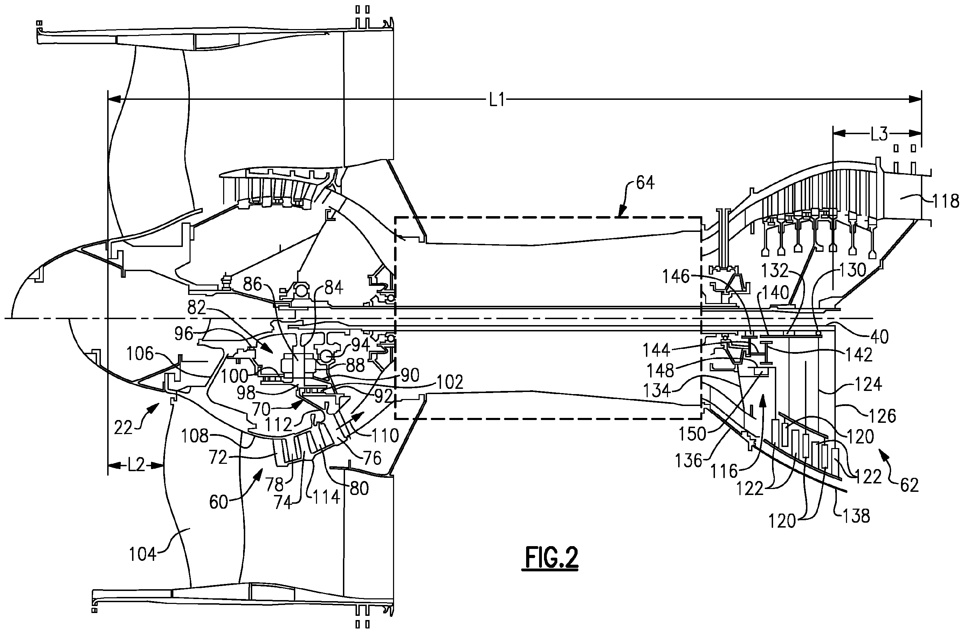

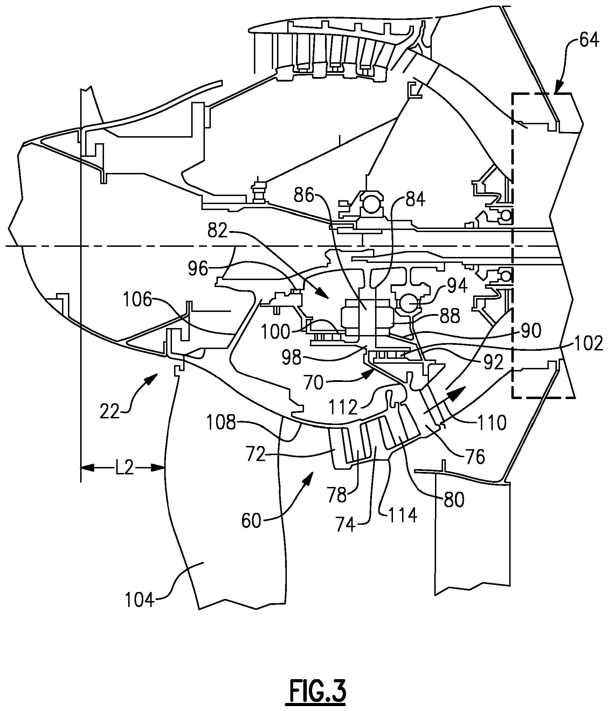

Referring to Figures 2 and 3, a geared turbofan architecture with a counter-rotating low pressure compressor (LPC) 60 and counter-rotating low pressure turbine (LPT) 62 is provided, which significantly reduces a length of the low speed or inner shaft 40 as compared to a non-counter-rotating configuration, an example of which is shown in Figure 1 and in the upper half of Figure 2. This non-rotating configuration in the upper half of Figure 2 is included for the purposes of a length comparison to the counter-rotating LPC and counter-rotating LPT configurations shown in the lower half of Figure 2. The engine has a high pressure core, schematically indicated at 64. It is to be understood that the high pressure core 64 includes the combustor 56 and the high spool 32 (i.e., the high pressure compressor 52, the high pressure turbine 54, and the high shaft 50) shown in Figure 1. The high pressure compressor 52 has a high pressure core ratio of 23:1, for example. To retain this ratio, as well as providing a desired low shaft diameter and speed, a combination of the counter-rotating LPC 60 and LPT 62 is utilized as shown in the lower half of Figure 2.

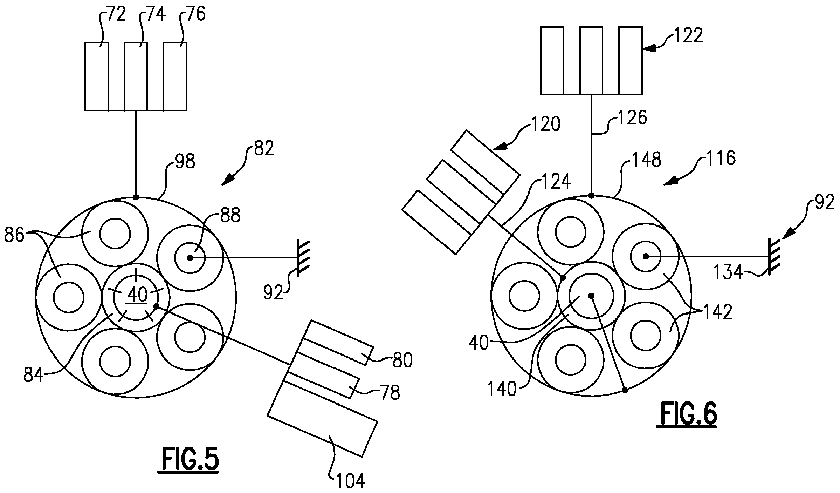

One example of the LPC 60 is found in United States Patent No. 7,950,220. In this example, which is shown in Figure 2, the LPC 60 includes a counter-rotating compressor hub 70 with blade stages 72, 74, and 76 interspersed with blade stages 78 and 80 of the low speed spool 30. The counter-rotating compressor hub 70 may be driven by a transmission 82. The transmission 82 is also schematically illustrated in Figure 5. In one example, the transmission 82 is an epicyclic transmission having a sun gear 84 mounted to the low shaft 40. A circumferential array of externally-toothed star gears 86 are in meshing engagement with the sun gear 84. The star gears 86 are carried on journals 88 carried by a carrier 90. The carrier 90 is fixedly mounted relative to an engine static structure 92. The static structure 92 is coupled to the low shaft 40 via multiple bearing systems 94 and 96 to permit rotation of the low shaft 40.

The transmission 82 further includes an internally-toothed ring gear 98 encircling and in meshing engagement with the star gears 86. The ring gear 98 is supported relative to the static structure 92 by one or more bearing systems 100 and 102. The transmission 82 causes a counter-rotation of ring gear 98. As the compressor hub 70 is engaged with the ring gear 98, the transmission 82 causes a counter-rotation of the compressor hub 70 (and blades 72, 74, 76) relative to the low speed spool 30. Fan blades 104 of the fan section 22 are mounted via a hub 106 to the low shaft 40. In addition, and low pressure compressor blades 78, 80 are also mounted to the hub 106 via a blade platform ring 108. As a result of the foregoing, the fan blades 104 and the low pressure compressor blades 78, 80 co-rotate with the low shaft 40.

An outboard surface of the platform ring 108 locally forms an inboard boundary of a core flowpath 110. The blades of stages 78 and 80 extend from inboard ends fixed to the platform ring 108 to free outboard tips. In the example shown, the blades of the downstreammost stage 76 of the hub 70 are mounted to an outboard end of a support 112. The outboard ends of the blades of the stage 76 are secured relative to a shroud ring 114. An inboard surface of the shroud ring 114 forms a local outboard boundary of the core flowpath 110. The outboard ends of the blades of the stages 72 and 74 are mounted to the shroud ring 114. The support 112 is affixed to the ring gear 98 to drive rotation of the blades of stage 76 and, through the shroud ring 114, the blades of stages 72 and 74.

As shown in the upper half of Figure 2, in one typical non-counter-rotating configuration, the engine 20 without a counter-rotating compressor or turbine has an overall length L1 defined from a foremost surface of the fan blade 104 to an aftmost end of a turbine exhaust case 118. The LPC configuration 60 provides a length reduction L2 by utilizing a counter-rotating compressor architecture. The LPT configuration 62 provides another length reduction L3 by utilizing a counter-rotating turbine architecture. One example of a LPT is found in United States Publication No. 2009/0191045 A1.

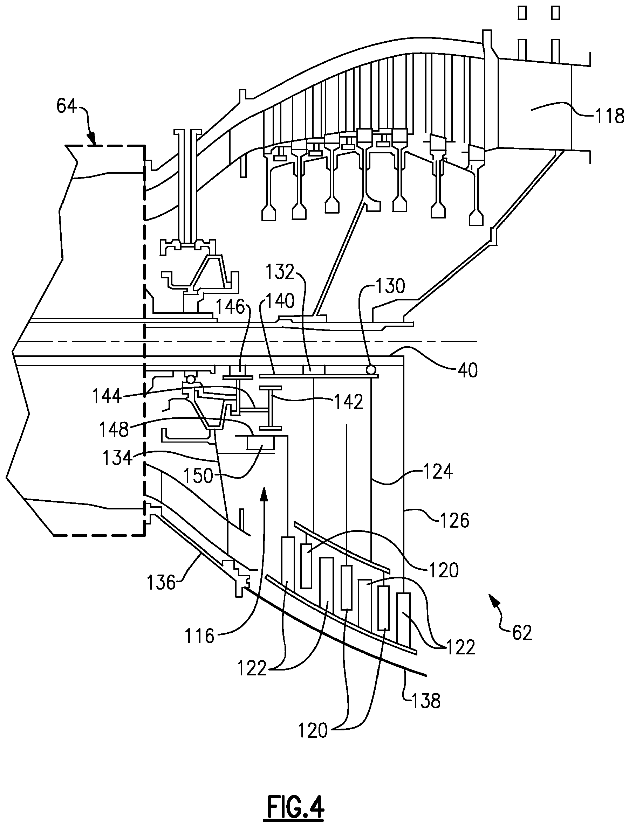

Figures 2 and 4 show another example of a LPT 62 having a counter-rotating configuration with a gear system 116 mounted to the mid turbine frame 134. The gear system 116 is also schematically illustrated in Figure 6. As a result, no turbine exhaust case 118 is needed, which further contributes to the overall amount of length reduction L3 by shortening the LPT static case portion. In this example, the LPT 62 has an inner set of blades 120 that are coupled to the low shaft 40 via the gear system 116 and an outer set of blades 122 interspersed with the inner set of blades 120. In one example, the number of stages in the inner set of blades 120 is equal to the number of stages in the outer set of blades 122. The outer set of blades 122 is directly coupled to the shaft 40. The outer blades 122 rotate in an opposite direction about the axis of rotation from the inner set of blades 120.

The outer set of blades 122 is fixed to an outer rotor 126 that directly drives the low shaft 40, i.e. the low shaft 40 and outer set of blades 122 rotate at a common speed. The inner set of blades 120 is fixed to an inner rotor 124 that drives the gear system 116. Bearings 130, 132 rotatably support the inner rotor 124. Bearing 130 supports an aft end of the inner rotor 124 for rotation relative to the low shaft 40, and bearing 132 supports a fore end of the inner rotor 124 for rotation relative to the shaft 40. In one example, the aft bearing 130 is a ball bearing and the fore bearing 132 is a roller bearing. A bearing 146 supports the low shaft 140 for rotation relative to the mid-turbine frame 134. In one example configuration, the shaft bearing 146 and the fore and aft bearings 132, 130 for the inner rotor 126 are axially spaced apart from each other parallel to the axis A. The shaft bearing 146 is located forward of the fore bearing 132. In one example, both bearings 132, 146 are roller bearings.

A mid-turbine frame 134 comprises a static structure that extends to an outer case portion 136. The outer case portion 136 is attached to a fore end of a LPT static case 138, which surrounds the inner 120 and outer 122 sets of blades. An aft end of the LPT static case 138 is unsupported since there is no turbine exhaust case 118.

The gear system 116 includes a sun gear 140 that is fixed for rotation with a fore end of the inner rotor 124. A circumferential array of externally-toothed star gears 142 are in meshing engagement with the sun gear 140. The star gears 142 are supported by a carrier 144 that is fixed to the mid-turbine frame 134.

A ring gear 148 is in meshing engagement with the star gears 142 which are driven by the sun gear 140. The fore end of the inner rotor 124 drives the sun gear 140. In the example shown in Figure 2, the fore end of the outer rotor 126 is configured to be driven by the ring gear 148. The fore end of the outer rotor 126 is supported relative to the mid-turbine frame 134 by a bearing 150. Thus, the inner set of blades 120 is driven at a faster speed than the outer set of blades 122. In one example, the gear system has a ratio within a range of between about 0.5:1 and about 5.0:1.

In this configuration, the gear system 116 is upstream or forward of the LPT 62. Specifically, the gear system 116 is positioned forward of the interspersed turbine blades 120, 122 and is surrounded by the mid-turbine frame. The carrier 144 for the star gears 142 is fixed to the mid-turbine frame 134. This counter-rotating configuration allows the overall length of the LPT static case 138 to be shortened compared to a non-counter-rotating configuration, and eliminates the need for a turbine exhaust case 118.

The low shaft 40 receives a portion of the overall driving input directly from the outer set of turbine blades 122 and a remaining portion of the overall driving input is provided by the inner set of turbine blades 120 via the gear system 116. The outer set of turbine blades 122 is configured to rotate at a lower speed and in an opposite direction from the inner set of blades 120. Spinning the inner set of turbine blades 120 at a higher speed takes advantage of the existing turbine disks ability to handle higher speeds. This configuration provides a geared fan architecture with a long, slow turning low shaft 40, which enables the use of a high pressure ratio core. Further, this configuration provides for significant length reduction as compared to prior configurations.

In the example engine, the fan 104 is connected to and directly driven by the shaft 40, thus rotating at the same speeds. The star gears 84, 140 are mounted to and directly coupled to the shaft 40. One set of compressor blades and one set of turbine blades (in the example, the inner compressor blades 78, 80 and outer turbine blades 122) are mounted to and directly coupled to the shaft 40. The carrier 90 and carrier 144 are grounded to the engine's static structure. The ring gears 98, 148 are respectively coupled to the other set of compressor and turbine blades (in the example, the outer compressor blades 72, 74, 76 and the inner turbine blades 120).

It should be understood that the LPC 60 and LPT 62 described above are just one example configuration, and that the LPC 60 and LPT 62 described above could be utilized with various other configurations. The transmission 82 of the LPC 60 and the gear system 116 of the LPT 62 may be independently tailored to provide the desired speed for each of the set of inner compressor blades, set of outer compressor blades, set of inner turbine blades and set of outer turbine blades. In one example, the transmission 82 and gear system 116 have different ratios than one another. Since independent gear systems are provided for each of the LPC 60 and LPT 62, the gears and support structure can be smaller and lighter than, for example, a single fan drive gear system arranged at the front of the engine. Moreover, since approximately half of each of the LPC 60 and LPT 62 is directly connected to the shaft 40, only approximately half of the power must be transmitted through each of the transmission 82 and gear system 116.

As a result of the foregoing improvements, an engine has been invented that includes both a desirable high pressure core ratio, while at the same time reducing the overall engine length, thereby maximizing the engine's power density.

Although an example embodiment has been disclosed, a worker of ordinary skill in this art would recognize that certain modifications would be possible, if they come within the scope of the claims.

## Claims

1. A gas turbine engine (20) comprising:
a fan (22) driven by a shaft (40) and arranged in a bypass flow path;
a core flow path downstream from the fan (22);
a compressor section driven by the shaft (40) and arranged within the core flow path;
wherein the compressor section includes a counter rotating low pressure compressor (60) comprising:
outer and inner compressor stages (72...80) interspersed with one another and configured to rotate in an opposite direction than one another about an axis of rotation, and
a transmission (82) coupling at least one of the outer and inner compressor stages (72...80) to the shaft (40);
a turbine section driving the shaft (40) and arranged within the core flow path; and
a mid-turbine frame (134);
**characterised in that**:
the turbine section includes a counter rotating low pressure turbine (62) comprising:
an outer rotor (126) including an outer set of turbine blades (122),
an inner rotor (124) having an inner set of turbine blades (120) interspersed with the outer set of turbine blades (122), the outer rotor (126) configured to rotate in an opposite direction about the axis of rotation from the inner rotor (124), and
a gear system (116) coupling at least one of the outer and inner rotors (124,126) to the shaft;
said gear system (116) being disposed upstream from the low pressure turbine (62) and being surrounded by the mid-turbine frame (134).

2. The gas turbine engine according to claim 1, wherein the outer set of turbine blades (122) is directly driven by the shaft (40).

3. The gas turbine engine according to claim 2, wherein the gear system (116) includes a sun gear (140) directly coupled to the outer turbine rotor (126), a plurality of star gears (142) in meshing engagement with the sun gear (140), and a ring gear (148) in meshing engagement with the star gears (142).

4. The gas turbine engine according to claim 3, wherein the star gears (142) are supported by a carrier (144) that is fixed to a mid-turbine frame (134).

5. The gas turbine engine according to claim 3 or 4, wherein the sun gear (140) is fixed for rotation to a fore end of the outer turbine rotor (126).

6. The gas turbine engine according to claim 3 or 4, wherein a fore end of the outer turbine rotor (126) is coupled to the ring gear (148), and an aft end of the outer turbine rotor (126) is coupled to the shaft (40).

7. The gas turbine engine according to any of claims 2 to 6 , wherein the gear system (116) is supported by a mid-turbine frame (134), a low pressure turbine static case having an aft end unsupported and a fore end connected to a mid-turbine frame outer case.

8. The gas turbine engine according to any preceding claim, wherein the transmission (82) is configured to rotate the inner compressor stage at a faster speed than the outer compressor stage, wherein, optionally, the transmission provides a gear ratio of greater than 0.5:1 .

9. The gas turbine engine according to claim 8, wherein the inner compressor stage (78,80) and fan (22) are driven at the same speed.

10. The gas turbine engine according to any preceding claim, wherein the gear system (116) is configured to rotate the inner set of turbine blades (120) at a faster speed than the outer set of turbine blades (122), wherein, optionally, the gear system (116) provides a gear ratio of greater than 0.5:1.

11. The gas turbine engine according to any preceding claim, comprising a high pressure compressor (52) having a pressure ratio of approximately 23:1.

12. The gas turbine engine according to any preceding claim, wherein the fan (22) is directly driven by the shaft (40).

13. The gas turbine engine according to any preceding claim, wherein the inner compressor stage is directly driven by the shaft (40).

14. The gas turbine engine according to claim 13, wherein the transmission (82) includes a sun gear (84) directly coupled to the shaft (40), a plurality of star gears (80) in meshing engagement with the sun gear (84), and a ring gear (98) in meshing engagement with the star gears (86).

15. The gas turbine engine according to claim 14, wherein the star gears (86) are supported by a carrier (90) that is fixed against rotation to static structure, and/or wherein the outer compressor stage is coupled to the ring gear (98).

## Patentansprüche

1. Gasturbinentriebwerk (20), umfassend:
ein Gebläse (22), das durch eine Welle (40) angetrieben wird und in einem Umgehungsflussweg angeordnet ist;
einen Kernflussweg stromabwärts des Gebläses (22);
einen Verdichterabschnitt, der durch die Welle (40) angetrieben wird und innerhalb des Kernflusswegs angeordnet ist;
wobei der Verdichterabschnitt einen gegenläufigen Niederdruckverdichter (60) beinhaltet, umfassend:
äußere und innere Verdichterstufen (72...80), die miteinander vermischt und konfiguriert sind, um sich in einer entgegengesetzten Richtung als zueinander um eine Drehachse zu drehen, und
ein Getriebe (82), das zumindest eine von den äußeren und inneren Verdichterstufen (72...80) an die Welle (40) koppelt;
einen Turbinenabschnitt, der die Welle (40) antreibt und innerhalb des Kernflusswegs angeordnet ist; und
einen Mittelturbinenrahmen (134);
**dadurch gekennzeichnet, dass**:
der Turbinenabschnitt eine gegenläufige Niederdruckturbine (62) beinhaltet, umfassend:
einen äußeren Rotor (126), der einen äußeren Satz Turbinenschaufeln (122) beinhaltet,
einen inneren Rotor (124), der einen inneren Satz Turbinenschaufeln (120) aufweist, der mit dem äußeren Satz Turbinenschaufeln (122) vermischt ist, wobei der äußere Rotor (126) konfiguriert ist, um sich in einer entgegengesetzten Richtung um die Drehachse von dem inneren Rotor (124) zu drehen, und
ein Getriebesystem (116), das zumindest einen von dem äußeren und dem inneren Rotor (124, 126) an die Welle koppelt;
wobei das Getriebesystem (116) stromaufwärts der Niederdruckturbine (62) angeordnet ist und von dem Mittelturbinenrahmen (134) umgeben ist.

2. Gasturbinentriebwerk nach Anspruch 1, wobei der äußere Satz Turbinenschaufeln (122) direkt durch die Welle (40) angetrieben wird.

3. Gasturbinentriebwerk nach Anspruch 2, wobei das Getriebesystem (116) ein Sonnengetriebe (140), das direkt an den äußeren Turbinenrotor (126) gekoppelt ist, eine Vielzahl von Sterngetrieben (142) in kämmendem Eingriff mit dem Sonnengetriebe (140) und ein Ringgetriebe (148) in kämmendem Eingriff mit den Sterngetrieben (142) beinhaltet.

4. Gasturbinentriebwerk nach Anspruch 3, wobei die Sterngetriebe (142) durch einen Träger (144) gestützt werden, der an einem Mittelturbinenrahmen (134) befestigt ist.

5. Gasturbinentriebwerk nach Anspruch 3 oder 4, wobei das Sonnengetriebe (140) zur Drehung an einem vorderen Ende des äußeren Turbinenrotors (126) befestigt ist.

6. Gasturbinentriebwerk nach Anspruch 3 oder 4, wobei ein vorderes Ende des äußeren Turbinenrotors (126) an das Ringgetriebe (148) gekoppelt ist und ein hinteres Ende des äußeren Turbinenrotors (126) an die Welle (40) gekoppelt ist.

7. Gasturbinentriebwerk nach einem der Ansprüche 2 bis 6, wobei das Getriebesystem (116) durch einen Mittelturbinenrahmen (134) gestützt wird, wobei ein statisches Gehäuse der Niederdruckturbine ein hinteres Ende, das nicht gestützt ist, und ein vorderes Ende aufweist, das mit einem äußeren Gehäuse des Mittelturbinenrahmens verbunden ist.

8. Gasturbinentriebwerk nach einem vorhergehenden Anspruch, wobei das Getriebe (82) konfiguriert ist, um die innere Verdichterstufe in einer schnelleren Geschwindigkeit als die äußere Verdichterstufe zu drehen, wobei optional das Getriebe ein Getriebeverhältnis von mehr als 0,5:1 bereitstellt.

9. Gasturbinentriebwerk nach Anspruch 8, wobei die innere Verdichterstufe (78, 80) und das Gebläse (22) in der gleichen Geschwindigkeit angetrieben werden.

10. Gasturbinentriebwerk nach einem vorhergehenden Anspruch, wobei das Getriebesystem (116) konfiguriert ist, um den inneren Satz Turbinenschaufeln (120) in einer schnelleren Geschwindigkeit als den äußeren Satz Turbinenschaufeln (122) zu drehen, wobei optional das Getriebesystem (116) ein Getriebeverhältnis von mehr als 0,5:1 bereitstellt.

11. Gasturbinentriebwerk nach einem vorhergehenden Anspruch, umfassend einen Hochdruckverdichter (52), der ein Druckverhältnis von ungefähr 23:1 aufweist.

12. Gasturbinentriebwerk nach einem vorhergehenden Anspruch, wobei das Gebläse (22) direkt durch die Welle (40) angetrieben wird.

13. Gasturbinentriebwerk nach einem vorhergehenden Anspruch, wobei die innere Verdichterstufe direkt durch die Welle (40) angetrieben wird.

14. Gasturbinentriebwerk nach Anspruch 13, wobei das Getriebe (82) ein Sonnengetriebe (84), das direkt an die Welle (40) gekoppelt ist, eine Vielzahl von Sterngetrieben (80) in kämmendem Eingriff mit dem Sonnengetriebe (84) und ein Ringgetriebe (98) in kämmendem Eingriff mit den Sterngetrieben (86) beinhaltet.

15. Gasturbinentriebwerk nach Anspruch 14, wobei die Sterngetriebe (86) durch einen Träger (90) gestützt werden, der gegen Drehung an statischer Struktur befestigt ist, und/oder wobei die äußere Verdichterstufe an das Ringgetriebe (98) gekoppelt ist.

## Revendications

1. Moteur à turbine à gaz (20) comprenant :
une soufflante (22) entraînée par un arbre (40) et agencée dans un chemin d'écoulement de dérivation ;
un chemin d'écoulement central en aval de la soufflante (22) ;
une section de compresseur entraînée par l'arbre (40) et agencée à l'intérieur du chemin d'écoulement central ;
dans lequel la section de compresseur comporte un compresseur basse pression contrarotatif (60) comprenant :
des étages de compresseur extérieur et intérieur (72...80) intercalés les uns avec les autres et conçus pour tourner dans un sens opposé les uns aux autres autour d'un axe de rotation, et
une transmission (82) couplant au moins l'un des étages de compresseur extérieur et intérieur (72...80) à l'arbre (40) ;
une section de turbine entraînant l'arbre (40) et agencée à l'intérieur du chemin d'écoulement central ; et
un cadre de turbine intermédiaire (134) ;
**caractérisé en ce que** :
la section de turbine comporte une turbine basse pression contrarotative (62) comprenant :
un rotor extérieur (126) comportant un ensemble extérieur d'aubes de turbine (122),
un rotor intérieur (124) ayant un ensemble intérieur d'aubes de turbine (120) intercalées avec l'ensemble extérieur d'aubes de turbine (122), le rotor extérieur (126) étant conçu pour tourner dans une direction opposée autour de l'axe de rotation à partir du rotor intérieur (124), et
une transmission par engrenages (116) couplant au moins l'un des rotors extérieur et intérieur (124, 126) à l'arbre ;
ladite transmission par engrenages (116) étant disposée en amont de la turbine basse pression (62) et étant entourée par le cadre de turbine intermédiaire (134).

2. Moteur à turbine à gaz selon la revendication 1, dans lequel l'ensemble extérieur d'aubes de turbine (122) est directement entraîné par l'arbre (40).

3. Moteur à turbine à gaz selon la revendication 2, dans lequel la transmission par engrenages (116) comporte une roue solaire (140) directement couplée au rotor extérieur de turbine (126), une pluralité d'engrenages en étoile (142) en prise avec la roue solaire (140), et une couronne dentée (148) en prise avec les engrenages en étoile (142).

4. Moteur à turbine à gaz selon la revendication 3, dans lequel les engrenages en étoile (142) sont supportés par un support (144) qui est fixé à un cadre de turbine intermédiaire (134).

5. Moteur à turbine à gaz selon la revendication 3 ou 4, dans lequel la roue solaire (140) est fixée pour rotation à une extrémité avant du rotor extérieur de turbine (126).

6. Moteur à turbine à gaz selon la revendication 3 ou 4, dans lequel une extrémité avant du rotor extérieur de turbine (126) est couplée à la couronne dentée (148), et une extrémité arrière du rotor extérieur de turbine (126) est couplée à l'arbre (40).

7. Moteur à turbine à gaz selon l'une quelconque des revendications 2 à 6, dans lequel la transmission par engrenages (116) est supportée par un cadre de turbine intermédiaire (134), un carter statique de turbine basse pression ayant une extrémité arrière non supportée et une extrémité avant reliée à un carter extérieur de cadre de turbine intermédiaire.

8. Moteur à turbine à gaz selon une quelconque revendication précédente, dans lequel la transmission (82) est conçue pour faire tourner l'étage de compresseur intérieur à une vitesse plus rapide que l'étage de compresseur extérieur, dans lequel, éventuellement, la transmission fournit un rapport d'engrenage supérieur à 0,5:1.

9. Moteur à turbine à gaz selon la revendication 8, dans lequel l'étage de compresseur intérieur (78, 80) et la soufflante (22) sont entraînés à la même vitesse.

10. Moteur à turbine à gaz selon une quelconque revendication précédente, dans lequel la transmission par engrenages (116) est conçue pour faire tourner l'ensemble intérieur d'aubes de turbine (120) à une vitesse plus rapide que l'ensemble extérieur d'aubes de turbine (122), dans lequel, éventuellement, la transmission par engrenages (116) fournit un rapport d'engrenage supérieur à 0,5:1.

11. Moteur à turbine à gaz selon une quelconque revendication précédente, comprenant un compresseur haute pression (52) ayant un rapport de pression d'environ 23:1.

12. Moteur à turbine à gaz selon une quelconque revendication précédente, dans lequel la soufflante (22) est directement entraînée par l'arbre (40).

13. Moteur à turbine à gaz selon une quelconque revendication précédente, dans lequel l'étage de compresseur intérieur est directement entraîné par l'arbre (40).

14. Moteur à turbine à gaz selon la revendication 13, dans lequel la transmission (82) comporte une roue solaire (84) directement couplée à l'arbre (40), une pluralité d'engrenages en étoile (80) en prise avec la roue solaire (84), et une couronne dentée (98) en prise avec les engrenages en étoile (86) .

15. Moteur à turbine à gaz selon la revendication 14, dans lequel les engrenages en étoile (86) sont supportés par un support (90) qui est fixé contre la rotation à une structure statique, et/ou dans lequel l'étage de compresseur extérieur est couplé à la couronne dentée (98).
